# EUROPEAN PATENT SPECIFICATION

(11) **EP 1 720 782 B1**
(45) Date of publication and mention of the grant of the patent: **28.04.2010**
(21) Application number: 05717260.3
(22) Date of filing: 02.03.2005
(51) Int. Cl.: B65G 53/24, B65G 53/60, F04F 5/20, B01D 47/10, B65F 5/00, B65G 53/62

(54) **METHOD AND APPARATUS FOR CONVEYING MATERIAL**
VERFAHREN UND VORRICHTUNG ZUR BEFÖRDERUNG VON MATERIAL
PROCEDE ET APPAREIL DE TRANSPORT DE MATIERES

(30) Priority: 03.03.2004 FI 20040344
(43) Date of publication of application: 15.11.2006
(73) Proprietor: Maricap OY, FI-01451 Vantaa (FI)
(72) Inventor: SUNDHOLM, Göran, 04310 Tuusula (FI)
(74) Representative: Laine, Terho Tapio
(86) International application number: PCT/FI2005/000133
(87) International publication number: WO 2005/085105

(56) References cited:
- EP-A2- 1 179 682
- DE-A1- 2 413 316
- DE-A1- 3 323 486
- GB-A- 288 862
- US-A- 1 965 866
- DATABASE WPI Week 200122, Derwent Publications Ltd., London, GB; Class D22, AN 1998-058758, XP002989008 & JP 9 301 504 A (NIPPON KOKAN KOJI KK) 25 November 1997
- DATABASE WPI Week 199828, Derwent Publications Ltd., London, GB; Class P41, AN 1998-316523, XP002989009 & JP 10 114 430 A (SATAKE SEISAKUSHO KK) 06 May 1998

## Description

### Background of the invention

The invention relates to a method, as defined in the preamble of claim 1, for conveying material, advantageously food-industry bulk material, especially cutting offals or food waste, by means of a pressure difference in a conveying pipe, in which method the material is fed to a conveying pipe, and further in the conveying pipe to a separator device in which the transferred material is separated from conveying air, in which method underpressure is achieved to the conveying pipe with an ejector apparatus the suction side of which is connected to the separator device, which ejector apparatus is operated with an actuating medium.

The invention relates also to an apparatus, as defined in the preamble of claim 13, for conveying material, advantageously food-industry bulk material, especially cutting offals and food waste, by means of a pressure difference in a conveying pipe, which apparatus comprises a conveying pipe for the material, a separator device, and a means for achieving underpressure to the conveying pipe with an ejector apparatus the suction side of which is connected to the separator device, which ejector apparatus is operated with an actuating medium.

Known are conveyance systems intended for conveying material, especially food products, such as meat products, which systems operate by means of a pressure difference. Such a system is presented in publication WO88/01597A. Several equivalent solutions exist. Also known are apparatuses, *inter alia,* in connection with ship kitchens, in which material is conveyed with a similar manner typically from several destinations to one or more containers or for further processing. Apparatuses are also utilised for conveying food products and waste in different institutions. Typical for them is that a vacuum apparatus is utilised for achieving a pressure difference, in which apparatus underpressure in the transfer pipe is achieved with vacuum generators, such as an ejector apparatus. Typically in the ejector apparatus, the suction in the conveying pipe is achieved with an ejector in which pressurised air is sprayed with a pneumatic apparatus to a nozzle, which, for its part, induces underpressure in the material-conveying pipe. In the conveying pipe, there is typically at least one valve member by opening and closing of which substitution air coming to the pipe is regulated. In known solutions, pressurised air is led to the ejector apparatus with constant pressure. This thus consumes always the same amount of energy regardless of the actual requirement of pressurised air. In a possible blockage situation of the conveying piping, the applicability of known solutions has been limited or separate apparatuses have been required for it. Furthermore, adapting known solutions for conveying materials with different requirements has been limited. In addition, in known solutions the transferred material may cause odour and/or particle nuisances to the blowing air of the vacuum apparatus, such as an ejector apparatus.

An object of this invention is to achieve a totally novel solution with which the disadvantages of known solutions are avoided. An object of the invention is to achieve a system with which particle and/or odour nuisances possible in known prior-art solutions are avoided. In addition, a target of the invention is to achieve a solution which enables intensifying the suction of the ejector apparatus.

### Brief description of the invention

Mainly characteristic for the method according to the invention is that to the ejector apparatus is brought a second medium, especially a liquidous or a liquidous and gaseous medium for intensifying the suction effect of the ejector apparatus.

In addition, the method according to the invention is characterised by what is stated in claims 2-12.
It is characteristic for the apparatus according to the invention that the apparatus comprises a means for feeding a second medium, advantageously a liquidous or a liquidous and gaseous medium, especially water, to the ejector apparatus for intensifying the suction effect of the ejector apparatus.

In addition, the apparatus according to the invention is characterised by what is stated in claims 14-22.

The solution according to the invention has numerous significant advantages. By supplementing the apparatus with a possibility to feed a second medium to the ejector device, on one hand, possible odour nuisances in the ejector device may be decreased, and at the same time, suction may be intensified. By bringing a second medium along with the actuating medium and, if required, by using the pressure of the actuating medium for bringing and/or feeding the second medium to the ejector space, an extremely advantageous and efficient solution is achieved. By arranging the nozzle of the second medium in the same unit with the nozzle of the actuating medium, a manufacturing-technically sensible solution is achieved. At the same time, a favourable solution is achieved for intensifying the suction of the ejector device. When utilising a material of greater density, such as liquid, advantageously water, the suction effect may be intensified. On the other hand, the suction effect may be further improved by bringing a second medium, even though the actuating medium is a liquid or a mixture of liquid and gas. When utilising liquid as the actuating medium and/or at least as the second medium, the gas flow may be "washed" by spraying it and thus possible particle and odour nuisances be eliminated. By utilising a separate pump to bring the second medium, its bringing may be easily regulated. In addition, the proportion of the actuating medium and the second medium may be regulated at the same time. By regulating the pressure of the actuating medium going to the ejector when required, considerable energy savings are achieved. In addition, the suction achieved by the ejector is affected by regulating the pressure, whereby also the underpressure and/or pressure difference of the material-conveying pipe may be conveniently regulated. By utilising flow paths arranged in parallel for regulating the pressure, which paths have a choke member and a valve which is opened and closed based on the impulses of the control system, is achieved an extremely feasible control system, which is easily modifiable. The transfer of material may be, if wished, begun with a larger pressure achieved for the ejector, and when the conveying process proceeds, the pressure may be decreased. In the different feed stations of the system, different materials may be handled, for which materials different pressure requirements may be set and thus the settings which affect their conveyance. On the other hand, in connection with different feed stations may be arranged a switch with which the user defines, for example according to the material fed, pressure values used in the conveyance. By arranging the choke members to be adjustable, the diversity of the system may be further improved, whereby it may be arranged for conveying materials of different qualities. The system allows, *inter alia,* a possibility to vary the pressure difference/(under)pressure in the material-conveying pipe, which characteristic may be further extended by arranging a connection according to the invention to be opened and closed for pressurised air in the material-conveying pipe. According to an embodiment of the invention, by utilising a means for monitoring the flow in the suction pipe between the separator device and the ejector device, the operation of the apparatus may be regulated based on the variations of the flow in question. By further arranging a material outlet means of the separator device to operate based on the commands of the control system, and further advantageously to use pressurised air as their actuating medium, the functionality of the system may be further improved.

### Brief description of the figures

In the following, the invention will be described in detail by means of an example with reference to the accompanying drawings, wherein
Figure 1 shows a diagram of an apparatus utilising a method according to the invention,
Figure 2 shows a diagram of an apparatus according to the invention,
Figure 3 shows a diagram of a second apparatus according to the invention, and
Figure 4 shows a diagram of a further apparatus according to the invention.

### Detailed description of the invention

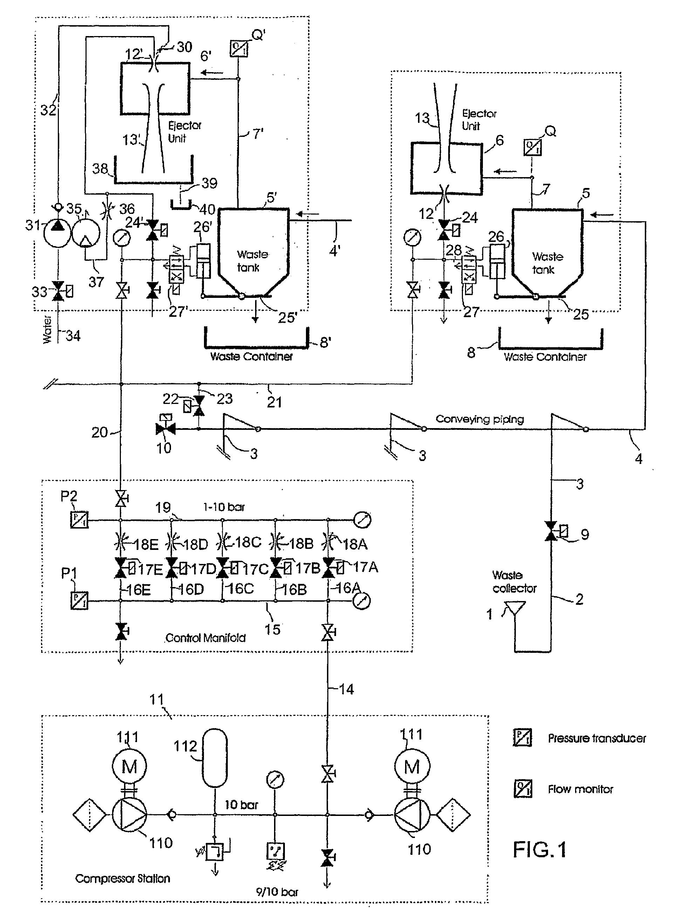

Figure 1 shows a diagram of an apparatus utilising a method according to the invention. With reference number 1 is indicated a feed station for material intended for transferring. The feed station 1 is typically a feed funnel. The system may comprise several feed stations 1 from which the material intended for transferring is fed to the conveying piping 2, 3, 4. Typically, the conveying piping comprises a main conveying pipe 4 into which several feed stations may have been connected through feed pipes 2, 3. The figure shows as a whole only one feed station 1 which is connected through the feed pipe 2, 3 to the main conveying pipe 4. In addition, the figure shows partially two other feed pipes 3 which are connected to the same main conveying pipe 4. The fed material is transferred along the conveying piping 2, 3, 4 to a separator device 5 in the opposite end of the conveying piping, in which device the transferred material is separated, for example by means of centrifugal force, from conveying air. The separated material is removed, for example when required, from the separator device 5 to a material container 8 or for further processing. In the embodiment of the figure, the separator device 5 is provided with material outlet members. From the separator device 5 leads a pipe 7 to a vacuum unit 6. By means of the vacuum unit, the underpressure required for transfer is achieved in the conveying piping 4. In the solution according to the figure, the vacuum unit 6 is an ejector unit. The ejector unit 6 is connected to an actuating-medium source, such as a pneumatic source 11, which comprises typically at least one compressor 110 and pneumatic accumulator 112. The underpressure distributes the required force for transferring the material in the conveying piping. The ejector unit 6 is connected to the separator device 5 in a delivery station, into which device, for its part, the main conveying pipe 4 is connected.

To the feed pipe 2, 3 is arranged a valve member 9 which is opened and closed so that material portions of suitable size are conveyed from the feed pipe 2, 3 to the conveying pipe 4. Material is fed to the feed pipe from a funnel 1, and after the funnel is full, the valve member 9 is opened, either automatically or manually. To the conveying pipe 4 is arranged, most suitably to the opposite end of the conveying pipe in respect of the separator device 5, a second valve member 10 which is opened and closed when required. Typically, the second valve 10 is open when the first valve member 9 is closed. Then, when there is underpressure in the conveying pipe 4, substitution air is fed to the conveying pipe 4. This ensures that the material intended for conveying is conveyed in the conveying pipe 4 towards the separator device 5 as the first valve 9 is closed. When the first valve 9 is opened, the second valve 10 is closed, whereby the next material portion is fed to the conveying piping. After this, the first valve 9 is closed, and the second valve 10 is opened. Typically, to each feed pipe 3 is arranged an equivalent valve 9 (shown only for the part of one pipe 3 in the figure).

The system comprises a control and regulation apparatus with which, *inter alia,* the valves 9, 10 are opened and closed, either based on a manual impulse or automatically.

According to the invention, the method relates to conveying material, advantageously food-industry bulk material, especially cutting offals or food waste, by means of a pressure difference in a conveying pipe 4. According to the method, material is fed to the conveying pipe 4, and further in the conveying pipe to the separator device 5 in which the transferred material is separated from conveying air. To the conveying pipe 4 is achieved underpressure with an ejector apparatus 6, as known *per se*, the suction side of which is connected to the separator device 5, which ejector apparatus is operated with an actuating medium, such as pressurised air. In the method according to the invention, to the ejector apparatus 6 is brought a second medium, especially a liquidous and/or gaseous medium.

According to an advantageous embodiment, the second medium is brought to the ejector apparatus 6 along with pressurised air. Then, the actuating medium flow may be, if required, utilised for suctioning the second medium with it.

According to a second embodiment, the second medium is brought regardless of the actuating medium, such as pressurised air. This enables an extremely large range of regulation for bringing the second medium. Then, it is possible, for example, to regulate the proportion of the actuating medium, such as pressurised air, and the second medium in a desired manner. Typically, the proportion of the second medium and the actuating medium, such as pressurised air, is regulated if required.

According to an advantageous embodiment, the second medium is sprayed to the ejector device. By spraying the second medium, it may be mixed well, when desired, with the actuating medium, such as pressurised air, and/or the usually gas-including material flow coming along the suction pipe 7. According to an embodiment, the second medium is sprayed to the ejector device 6 before the mixing of gases coming from the suction pipe 7 with the actuating medium of the ejector. According to an advantageous embodiment, the second medium is sprayed to the ejector device 6 during the mixing of the gases coming from the suction pipe 7 with the actuating medium or after it. The spraying may be extremely fine when utilising liquid as the second medium. Then, it may be sprayed as a liquid-bearing mist.

By bringing the second medium, one tries to eliminate odour and/or particle nuisances and/or intensify the suction effect of the ejector apparatus. As the second medium is typically utilised a liquidous medium, especially water.

In the method, according to an advantageous embodiment, at least a major part of the second medium and/or the actuating medium is separated from the gas flow. This is performed after the material flow coming through the suction pipe 7 has mixed with the flow of the actuating medium and/or the second medium. Then, the actuating medium flow and/or the second medium flow has had a chance to affect the flow coming through the suction pipe and has typically washed it. The gas flow coming from the ejector, which flow has liquid drops and/or material particles, is deflected so that the liquid and the material particles in it remain in a collector member 38 from which they are typically led out. The cleaned gas flow is led out. A part of the operation of the above-described characteristics is explained in detail below.

According to an advantageous embodiment, mainly gaseous medium, such as pressurised air, is utilised as the actuating medium.

According to a second embodiment, liquid-bearing medium, such as water mist, is utilised as the actuating medium. Then, it is possible to typically achieve a better suction effect in the suction pipe 7 compared to pressurised air. By bringing a second medium, the suction efficiency may be further improved.

An apparatus according to the invention for conveying material, advantageously food-industry bulk material, especially cutting offals and food waste, by means of a pressure difference in a conveying pipe 4, which apparatus comprises a conveying pipe 4 for the material, a separator device 5, and a means for achieving underpressure to the conveying pipe 4 with an ejector apparatus 6 the suction side of which is connected to the separator device 5, which ejector apparatus is operated with an actuating medium, such as pressurised air. The apparatus comprises a means 30 for feeding a second medium, advantageously a liquidous and/or gaseous medium, especially water, to the ejector apparatus 6. The means for bringing the second medium comprises at least one nozzle 30. The nozzle 30 may be arranged in connection with an actuating-medium nozzle 12 operating the ejector apparatus or separate from it.

According to an embodiment, the means for bringing the second medium comprises at least one nozzle 12, 30 from at least one opening of which the second medium is sprayed to the ejector device 6 along with pressurised air. Then, the second medium is brought amongst pressurised air already before the nozzle 12 or not until in the nozzle 12, 30

According to a second embodiment, the means for bringing the second medium comprises at least one nozzle 12, 30 from at least one opening of which the second medium is sprayed to the ejector device 6 separately from pressurised air. In this case, the same nozzle end, which has at least one dedicated opening for the second medium, may be utilised for pressurised air and the second medium.

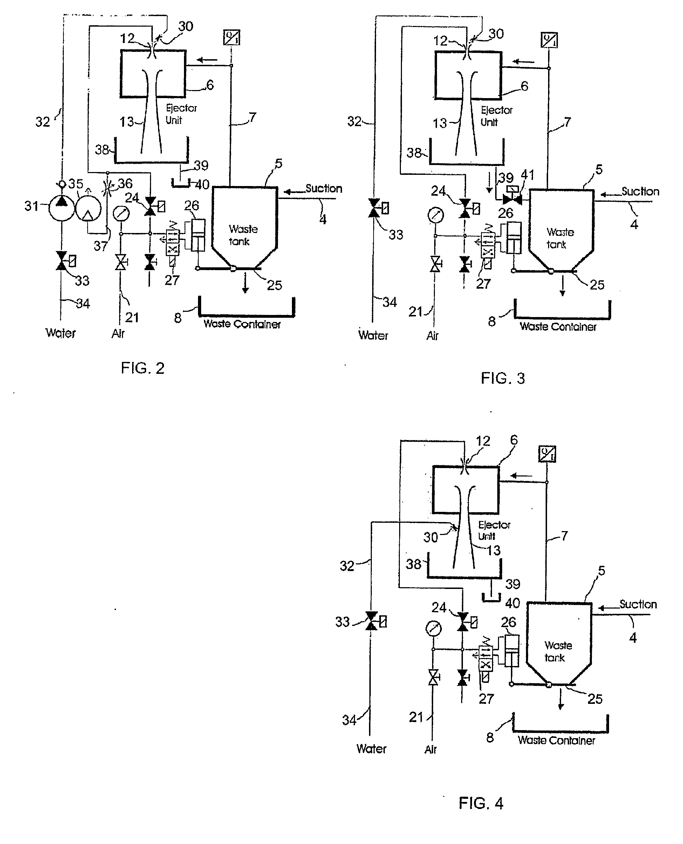

In the embodiment according to Figures 1 and 2, the means for bringing the second medium comprises a pump device 31. It has a pipe, such as a water pipe 34, or a connection to a separate container from which the pump device 31 pumps a second medium, typically liquid, along the pipe 32 going to the nozzle 12, 30.

According to an embodiment, at least a part of the devices utilised in bringing the second medium are operated with an actuating medium, such as pressurised air. Then, pressurised air may be utilised ejector-like to suction the second medium. On the other hand, also a solution according to Figure 2 may be utilised, in which solution the pump 31 is operated by a pneumatic motor 35.

According to an embodiment of a device according to the invention, at least one nozzle 30 of the second medium is arranged in the vicinity of the mouth of the ejector pipe 13. Then typically, an extremely favourable effect is gained for the gas-bearing material flow coming along the suction pipe 7. Placing the nozzle of the second medium in the vicinity of the pneumatic nozzle is a good option both regarding the manufacturing technique and the efficient operation of the device.

According to a second embodiment, the nozzle 30 of the second medium is arranged to the ejector pipe 13, advantageously to its wall. Then, it is possible to affect the flow coming through the ejector pipe.

According to an embodiment, the apparatus comprises a means 38 for separating liquidous and/or solid matter from the gas flow. Typically is arranged a collector member 38, whereby the gas flow of the ejector device is additionally deflected so that the liquid drops and/or material particles or at least a part of them remain in the collector member 20. The apparatus comprises an outlet fitting 39 for leading the separated liquid and/or solid matter to a sewer, a separate container 40 or back to the separator device 5. These alternatives are presented in Figures 2, 3 and 4.

In the following, the above-described characteristics are explained in detail. Between the pressurised-air production apparatus 11 and the ejector apparatus 6 is arranged a control apparatus which typically comprises several valve members 17A, 17B, 17C, 17D, 17E and choke members 18A, 18B, 18C, 18D, 18E. Each pair of a valve member and a choke member is arranged to a flow path 16A, 16B, 16C, 16D, 16E which are arranged between a pipeline 14 coming from the pneumatic source and a pipeline 20 going to the ejector device. In the embodiment of the figure, there are several valves 17A...17E connected in parallel. On the inlet side of pressurised air is for each flow path 16A...16E a common inlet path 15, and on the outlet side, there is a channel 19 connecting flow paths 16A...16E. The apparatus comprises a means for measuring and supplying pressure P1 of the pneumatic network in the flow direction before at least one valve 17A...17E and choke member 18A...18E, and in the flow direction of pressure P2, after the combination of a valve and a choke. When necessary, the pressurised-medium paths 16A...16E may be opened and/or closed in the control apparatus. Then, when the requirement of the pressurised medium, especially pressurised air, grows, for example, when the number of operating ejector units 6, 6' increases, it is possible to open medium paths 16A...16E, and correspondingly, when the number of operating ejectors 6, 6' decreases, to close paths. Alternatively, paths 16A...16E which allow a greater rate of medium flow may be opened with the valve members 17A...17E, and a path with a smaller flow rate may be closed. With the control apparatus, it is thus possible to achieve great many different combinations which tally to the different requirements of pressurised-air supply. Correspondingly, the pressure in the channel going to the ejectors may be affected. Then, it is possible to alter the underpressure achieved by the ejectors to the material-conveying pipe 4, 4' by affecting the number of open flow paths and/or the choke of paths 18A...18E. By means of adjustable chokes 18A...18E, the system may be arranged for extremely different applications and to function in connection with conveying devices for different materials. On the other hand, it is possible to arrange the pressure of the conveying pipe according to the requirements of different materials. Then, for example when conveying a material with light density, such as feathers, it is possible to utilise a lower pressure compared to when conveying a material with greater density, such as other offals. In addition, it is possible to change the prevailing conditions in the conveying pipe in the middle of the conveying process, whereby, for example, in the early stage of the conveyance there is a different pressure than in the final stage.

From a pneumatic network, typically after control valves 17A...17E, may be arranged a connection 23, which may be opened and closed with the valve member 22, to the conveying pipe 4. By means of this, it is possible to bring supplementary air to the conveying pipe, and if required, the pressure of the conveying pipe may be altered, for example, by pulsing, whereby the pressure of the conveying pipe may vary between underpressure and overpressure. This may be useful, for example, when handling the conveyed material and/or the conveying piping or, for example, when clearing a possible blockage in the conveying pipe 4. Typically, the connection 23 to be opened and closed is arranged to the conveying pipe 4 in the conveyance direction of the material before the connection of the feed pipe 3 and the conveying pipe 4.

In the pneumatic network, after control devices 17A...E, 18A...E and before the nozzle 12 of the ejector device 6, there is typically a closing valve 24 which may be controlled with the control system. Then, the spray for the nozzle 12 may be opened and closed when required.

In the solution according to the figure, there are also material outlet devices from the separator device 5. These comprise in the embodiment of the figure a closing member 25, arranged to the bottom part of the separator device 5, which member may be opened and closed when required. Then, the material accumulated to the separator device and conveyed in the pipe 4 exits the separator device 5 to a material container 8, typically arranged below it, from which container the material may be conveyed for further processing. In the solution according to the figure, the outlet devices are pressurised-medium-operated, especially pneumatic. The apparatus comprises, for example, a cylinder-piston combination 26 with which the closing member 25, which is, for example, a lid hinged to the bottom of the separator device, is opened and closed. The means further comprises a valve member 27 with which the cylinder-piston unit 26 is controlled. In the case of the figure, the medium source of the outlet devices is the same pressurised-air production station 11 from which pressurised air is led to the ejector devices. The pipeline 28 of the actuating medium of the outlet members is connected to a pipeline 21 going to the ejector 12. As a consequence of an impulse given by the control system or a manual one, the valve member moves to a position in which the cylinder-piston unit opens the closing member 25. Presumably for the time of unloading, the flow path going to the ejector nozzle is closed with the valve 24. After the unloading, the valve 27 returns to the position according to the figure, whereby the closing member 25 closes. After this, it is possible to open the flow path of pressurised air for the ejector nozzle 12.

The system may also additionally comprise a means for monitoring medium flow Q. In the solution according to the figure, a flow sensor Q is arranged between the separator device 5 and the ejector apparatus 6 in the pipeline 7. Based on the flow rate, the amount of underpressure in the conveying pipe 4 may be regulated. It is also possible to control the operation of the outlet device of the separator 5. When the flow decreases below a preset limit, it is possible, for example, to increase the pressure of the ejector nozzle 12 and to aim at increasing the flow in the pipeline 7, and at the same time, the underpressure of the conveying pipe 4. In addition to this, it is also possible to alter the pressure of the ejector device, for example, by opening and/or closing valves 17A...17E, and/or by opening and closing the valve 10, and/or by leading pressurised air to the conveying pipe 4, for example, by opening the valve 23. The decrease of flow is typically an indication of a possible blockage in the conveying pipe.

In addition, Figure 1 shows a second material-conveying pipe 4' into which, correspondingly, the conveyed material may be fed at least in one feed station (not shown in the figure). The feed station may be equivalent to the one utilised in connection with the first material-conveying pipe 4. The underpressure in the conveying pipe 4' is regulated with a second ejector device 6'. The second ejector device differs from the first ejector device 6 in that it comprises the spray means 30 of a second medium. The second medium is typically liquidous or gaseous or a mixture of a liquidous and a gaseous medium. In the embodiment of the figure, the medium is liquidous, aqueous medium which is brought to the ejector device 6'. By bringing the second medium, it is possible to affect the suction produced by the ejector device and/or it is possible to manage the characteristics of pressurised air affecting in the ejector device and/or mainly gaseous material flow drifting from the separator device to the ejector. Such characteristics are, *inter alia,* the odour nuisances possibly caused by the conveyed material, which nuisances are advantageously decreased by the sprayed second medium. In connection with the ejector apparatus 6', to the opposite end in regard to the spray nozzle of the ejector in the spray direction, is arranged a collector member 38 which collects at least a part of liquid drops, and leads the collected liquid, for example, to a container 40 or to a sewer or for further processing.

In the embodiment according to Figure 2, the second medium is pumped to the nozzle 30 with the pump means 31 along the pipeline 32. The pump means is operated in the embodiment of the figure by an actuator, especially a pneumatic motor 35. According to the figure, the pneumatic motor gets its actuating medium through a channel 37 connected to the pipeline going to the ejector nozzle 12'. To the channel 37 is arranged in the embodiment of the figure an adjustable choke 36. Then, it is possible to affect the motor 35 operating the pump 31, and thus the amount and/or pressure of the sprayed medium and/or the proportion of the pressurised air and the second medium of the ejector. Naturally, it is also possible to utilise other arrangements for spraying a second medium in the ejector apparatus. Figures 3 and 4 show alternative solutions.

In the example according to the figure, the outlet pressure in the compressor station 1 is, for example, 10 bar which may be, for example, the pressure of a pressure-monitoring member P1. With a control device according to the invention, the pressure P2 may be regulated, for example, in the range of 1-10 bar. It is also possible, if pressure P1 decreases for some reason, that by means of the system more flow paths 16A...16E are opened and/or a flow path is changed into one with a smaller choke effect. Then, the system aims at keeping the pressure P2 as desired even though the pressure P1 decreases. The pressure values of the example are the typical values of an embodiment, whereby the used pressures and the pressure ranges may vary considerably from the presented example. They are affected by, *inter alia,* conveyed material, capacity, extent of the system, and many other factors.

It is obvious to those skilled in the art that the invention is not limited to the embodiments described above, but it may be varied within the scope of the enclosed claims. If required, the characteristic features possibly described in this specification along with other characteristic features may also be used separate from each other.

## Claims

1. A method for conveying material, advantageously food-industry bulk material, especially cutting offals or food waste, by means of a pressure difference in a conveying pipe (4), in which method the material is fed to the conveying pipe (4), and further in the conveying pipe to a separator device (5) in which the transferred material is separated from conveying air, in which method underpressure is achieved to the conveying pipe (4) with an ejector apparatus (6) the suction side of which is connected to the separator device (5), which ejector apparatus is operated with an actuating medium, **characterised in that** to the ejector apparatus (6) is brought a second medium, the second medium being a liquidous or a liquidous and gaseous medium for intensifying the suction effect of the ejector apparatus.

2. A method according to claim 1, **characterised in that** the second medium is brought to the ejector apparatus (6) along with the actuating medium.

3. A method according to claim 1 or 2, **characterised in that** the second medium is brought to the ejector apparatus (6) regardless of the actuating medium.

4. A method according to any one of claims 1-3, **characterised in that** the proportion of the second medium and the actuating medium is regulated if required.

5. A method according to any one of claims 1-4, **characterised in that** the second medium is sprayed to the ejector device.

6. A method according to any one of claims 1-5, **characterised in that** the second medium is sprayed to the ejector device (6) before the mixing of gases coming from a suction pipe (7) with the actuating medium of the ejector.

7. A method according to any one of claims 1-6, **characterised in that** the second medium is sprayed to the ejector device (6) during the mixing of gases of the suction pipe (7) with the actuating medium or after it.

8. A method according to any one of claims 1-7, **characterised in that** at least a major part of the second medium is separated from the gas flow.

9. A method according to any one of claims 1-8, **characterised in that** odour and/or particle nuisances are eliminated.

10. A method according to any one of claims 1-9, **characterised in that** as the second medium is utilised a liquidous medium, especially water.

11. A method according to any one of claims 1-10, **characterised in that** as the actuating medium is utilised mainly a gaseous medium, such as pressurised air.

12. A method according to any one of claims 1-10, **characterised in that** as the actuating medium is utilised a liquid-bearing medium, such as water mist.

13. An apparatus for conveying material, advantageously food-industry bulk material, especially cutting offals and food waste, by means of a pressure difference in a conveying pipe (4), which apparatus comprises the conveying pipe (4) for the material, a separator device (5), and means for achieving underpressure to the conveying pipe (4) with an ejector apparatus (6) the suction side of which is connected to the separator device (5), which ejector apparatus is operated with an actuating medium, **characterised in that** the apparatus comprises means (30) for feeding a second medium, advantageously a liquidous or a liquidous and gaseous medium, especially water, to the ejector apparatus (6) for intensifying the suction effect of the ejector apparatus.

14. An apparatus according to claim 13, **characterised in that** the means for bringing the second medium comprises at least one nozzle (30).

15. An apparatus according to claim 13 or 14, **characterised in that** the means for bringing the second medium comprises at least one nozzle (12, 30) from at least one opening of which the second medium is sprayed to the ejector device (6) along with the actuating medium.

16. An apparatus according to any one of claims 13-15, **characterised in that** the means for bringing the second medium comprises at least one nozzle (12, 30) from at least one opening of which the second medium is sprayed separately from the actuating medium to the ejector device (6).

17. An apparatus according to any one of claims 13-16, **characterised in that** the means for bringing the second medium comprises a pump device (35).

18. An apparatus according to any one of claims 13-17, **characterised in that** at least a part of the devices for bringing the second medium is operated with an actuating medium.

19. An apparatus according to any one of claims 13-18, **characterised in that** at least one nozzle (30) of the second medium is arranged to the ejector pipe (13) in the vicinity of the mouth of the ejector pipe.

20. An apparatus according to any one of claims 13-19, **characterised in that** the nozzle (30) of the second medium is arranged to the ejector pipe (13), advantageously to its wall.

21. An apparatus according to any one of claims 13-20, **characterised in that** the apparatus comprises a means (38) for separating liquidous and/or solid matter from the gas flow.

22. An apparatus according to any one of claims 13-21, **characterised in that** the apparatus comprises an outlet fitting (39) for leading the separated liquid and/or solid matter to a sewer, a separate container (40) or back to the separator device (5).

## Patentansprüche

1. Verfahren zur Beförderung von Material, vorteilhafterweise Massengut der Nahrungsmittelindustrie, insbesondere von Schneidabfällen oder Nahrungsmittelabfall, mittels einer Druckdifferenz in einem Förderrohr (4), wobei in dem Verfahren das Material zu dem Förderrohr (4) und ferner in dem Förderrohr zu einer Trennvorrichtung (5) zugeführt wird, in der das übertragene Material von einer Förderluft getrennt wird, wobei in dem Verfahren an dem Förderrohr (4) ein Unterdruck mit einer Ejektorvorrichtung (6) erzielt wird, deren Saugseite mit der Trennvorrichtung (5) verbunden ist, wobei die Ejektorvorrichtung mit einem Treibmedium betrieben wird, **dadurch gekennzeichnet, dass** der Ejektorvorrichtung (6) ein zweites Medium zugeführt wird, wobei das zweite Medium ein flüssiges oder ein flüssiges und gasförmiges Medium zur Intensivierung der Saugwirkung der Ejektorvorrichtung ist.

2. Verfahren nach Anspruch 1, **dadurch gekennzeichnet, dass** das zweite Medium der Ejektorvorrichtung (6) gemeinsam mit dem Treibmedium zugeführt wird.

3. Verfahren nach Anspruch 1 oder 2, **dadurch gekennzeichnet, dass** das zweite Medium ungeachtet des Treibmediums der Ejektorvorrichtung (6) zugeführt wird.

4. Verfahren nach einem beliebigen der Ansprüche 1-3, **dadurch gekennzeichnet, dass** das Verhältnis zwischen dem zweiten Medium und dem Treibmedium im Bedarfsfall geregelt wird.

5. Verfahren nach einem beliebigen der Ansprüche 1-4, **dadurch gekennzeichnet, dass** das zweite Medium zu der Ejektorvorrichtung gesprüht wird.

6. Verfahren nach einem beliebigen der Ansprüche 1-5, **dadurch gekennzeichnet, dass** das zweite Medium zu der Ejektorvorrichtung (6) gesprüht wird, bevor sich Gase, die von einem Saugrohr (7) ankommen, mit dem Treibmedium des Ejektors vermischen.

7. Verfahren nach einem beliebigen der Ansprüche 1-6, **dadurch gekennzeichnet, dass** das zweite Medium während der Vermischung der Gase des Saugrohrs (7) mit dem Treibmedium oder danach zu der Ejektorvorrichtung (6) gesprüht wird.

8. Verfahren nach einem beliebigen der Ansprüche 1-7, **dadurch gekennzeichnet, dass** wenigstens ein Großteil des zweiten Mediums von dem Gasstrom abgetrennt wird.

9. Verfahren nach einem beliebigen der Ansprüche 1-8, **dadurch gekennzeichnet, dass** Geruchs- und/oder Teilchenbelästigungen beseitigt werden.

10. Verfahren nach einem beliebigen der Ansprüche 1-9, **dadurch gekennzeichnet, dass** als das zweite Medium ein flüssiges Medium, insbesondere Wasser, verwendet wird.

11. Verfahren nach einem beliebigen der Ansprüche 1-10, **dadurch gekennzeichnet, dass** als das Treibmedium vorwiegend ein gasförmiges Medium, wie beispielsweise Druckluft, verwendet wird.

12. Verfahren nach einem beliebigen der Ansprüche 1-10, **dadurch gekennzeichnet, dass** als das Treibmedium ein Flüssigkeit führendes Medium, wie beispielsweise Wassernebel, verwendet wird.

13. Vorrichtung zur Beförderung von Material, vorteilhafterweise Massengut der Nahrungsmittelindustrie, insbesondere von Schneidabfällen und Nahrungsmittelabfall, mittels einer Druckdifferenz in einem Förderrohr (4), wobei die Vorrichtung das Förderrohr (4) für das Material, eine Trennvorrichtung (5) und eine Einrichtung zur Erzielung eines Unterdrucks an dem Förderrohr (4) mit einer Ejektorvorrichtung (6) aufweist, deren Saugseite mit der Trennvorrichtung verbunden ist, wobei die Ejektorvorrichtung mit einem Treibmedium betrieben ist, **dadurch gekennzeichnet, dass** die Vorrichtung eine Einrichtung (30) zur Zuführung eines zweiten Mediums, vorteilhafterweise eines flüssigen oder eines flüssigen und gasförmigen Mediums, insbesondere Wasser, zu der Ejektorvorrichtung (6) zur Intensivierung der Saugwirkung der Ejektorvorrichtung aufweist.

14. Vorrichtung nach Anspruch 13, **dadurch gekennzeichnet, dass** die Einrichtung zur Zuführung des zweiten Mediums wenigstens eine Düse (30) aufweist.

15. Vorrichtung nach Anspruch 13 oder 14, **dadurch gekennzeichnet, dass** die Einrichtung zur Zuführung des zweiten Mediums wenigstens eine Düse (12, 30) aufweist, von deren wenigstens einer Öffnung aus das zweite Medium zu der Ejektorvorrichtung (6) gemeinsam mit dem Treibmedium gesprüht wird.

16. Vorrichtung nach einem beliebigen der Ansprüche 13-15, **dadurch gekennzeichnet, dass** die Einrichtung zur Zuführung des zweiten Mediums wenigstens eine Düse (12, 30) aufweist, von deren wenigstens einer Öffnung aus das zweite Medium gesondert von dem Treibmedium zu der Ejektorvorrichtung (6) gesprüht wird.

17. Vorrichtung nach einem beliebigen der Ansprüche 13-16, **dadurch gekennzeichnet, dass** die Einrichtung zur Zuführung des zweiten Mediums eine Pumpenvorrichtung (35) aufweist.

18. Vorrichtung nach einem beliebigen der Ansprüche 13-17, **dadurch gekennzeichnet, dass** wenigstens ein Teil der Vorrichtungen zur Zuführung des zweiten Mediums mit einem Treibmedium betrieben wird.

19. Vorrichtung nach einem beliebigen der Ansprüche 13-18, **dadurch gekennzeichnet, dass** wenigstens eine Düse (30) für das zweite Medium an dem Ejektorrohr (13) in der Nähe der Mündung des Ejektorrohrs angeordnet ist.

20. Vorrichtung nach einem beliebigen der Ansprüche 13-19, **dadurch gekennzeichnet, dass** die Düse (30) für das zweite Medium an dem Ejektorrohr (13), vorteilhafterweise an seiner Wand, angeordnet ist.

21. Vorrichtung nach einem beliebigen der Ansprüche 13-20, **dadurch gekennzeichnet, dass** die Vorrichtung eine Einrichtung (38) zur Abtrennung flüssiger und/oder fester Materie von dem Gasstrom aufweist.

22. Vorrichtung nach einem beliebigen der Ansprüche 13-21, **dadurch gekennzeichnet, dass** die Vorrichtung einen Auslassanschluss (39) zur Führung der abgetrennten flüssigen und/oder festen Materie zu einem Ablaufkanal, einem gesonderten Behälter (40) oder zurück zu der Trennvorrichtung (5) aufweist.

## Revendications

1. Procédé pour convoyer des matières, avantageusement des matières en vrac dans l'industrie alimentaire, spécialement des abats ou des déchets alimentaires, au moyen d'une différence de pression dans un tube de convoyage (4), procédé dans lequel les matières sont amenées au tube de convoyage (4) et poursuivent dans le tube de convoyage jusqu'à un dispositif séparateur (5) dans lequel les matières transférées sont séparées de l'air de convoyage, procédé dans lequel une dépression est réalisée vers le tube de convoyage (4) avec un appareil éjecteur (6) dont le côté succion est raccordé au dispositif séparateur (5), et ledit appareil éjecteur fonctionne avec un milieu d'actionnement,
**caractérisé en ce que** l'on amène à l'appareil éjecteur (6) un second milieu, le second milieu étant un milieu liquide ou un milieu liquide et gazeux pour intensifier l'effet de succion de l'appareil éjecteur.

2. Procédé selon la revendication 1, **caractérisé en ce que** le second milieu est amené à l'appareil éjecteur (6) ensemble avec le milieu d'actionnement.

3. Procédé selon la revendication 1 ou 2, **caractérisé en ce que** le second milieu est amené à l'appareil éjecteur (6) indépendamment du milieu d'actionnement.

4. Procédé selon l'une quelconque des revendications 1 à 3, **caractérisé en ce que** la proportion du second milieu et du milieu d'actionnement est régulée si nécessaire.

5. Procédé selon l'une quelconque des revendications 1 à 4, **caractérisé en ce que** le second milieu est pulvérisé vers le dispositif éjecteur.

6. Procédé selon l'une quelconque des revendications 1 à 5, **caractérisé en ce que** le second milieu est pulvérisé vers le dispositif éjecteur (6) avant le mélange de gaz venant d'un tube de succion (7) avec le milieu d'actionnement de l'éjecteur.

7. Procédé selon l'une quelconque des revendications 1 à 6, **caractérisé en ce que** le second milieu est pulvérisé vers le dispositif éjecteur (6) pendant le mélange de gaz du tube de succion (7) avec le milieu d'actionnement ou après celui-ci.

8. Procédé selon l'une quelconque des revendications 1 à 7, **caractérisé en ce qu'**au moins une majeure partie du second milieu est séparée vis-à-vis de l'écoulement de gaz.

9. Procédé selon l'une quelconque des revendications 1 à 8, **caractérisé en ce que** l'on élimine les odeurs et/ou les particules nuisibles.

10. Procédé selon l'une quelconque des revendications 1 à 9, **caractérisé en ce que** l'on utilise un milieu liquide, spécialement de l'eau, à titre de second milieu.

11. Procédé selon l'une quelconque des revendications 1 à 10, **caractérisé en ce que** l'on utilise principalement un milieu gazeux, comme de l'air comprimé, à titre de milieu d'actionnement.

12. Procédé selon l'une quelconque des revendications 1 à 10,
**caractérisé en ce que** l'on utilise un milieu porteur de liquide, comme un brouillard d'eau, à titre de milieu d'actionnement.

13. Appareil pour convoyer des matières, avantageusement des matières en vrac dans l'industrie alimentaire, spécialement des abats et des déchets alimentaires, au moyen d'une différence de pression dans un tube de convoyage (4), ledit appareil comprenant le tube de convoyage (4) pour les matières, un dispositif séparateur (5), et des moyens pour assurer une dépression vers le tube de convoyage (4), avec un appareil éjecteur (6) dont le côté succion est relié au dispositif séparateur (5), l'appareil éjecteur fonctionnant avec un milieu d'actionnement, **caractérisé en ce que** l'appareil comprend des moyens (30) pour alimenter un second milieu, avantageusement un milieu liquide ou un milieu liquide et gazeux, spécialement de l'eau, vers l'appareil éjecteur (6) pour intensifier l'effet de succion de l'appareil éjecteur.

14. Appareil selon la revendication 13, **caractérisé en ce que** les moyens pour alimenter le second milieu comprennent au moins une buse (30).

15. Appareil selon la revendication 13 ou 14, **caractérisé en ce que** les moyens pour alimenter le second milieu comprennent au moins une buse (12, 30) avec au moins une ouverture depuis laquelle le second milieu est pulvérisé vers le dispositif éjecteur (6) ensemble avec le milieu d'actionnement.

16. Appareil selon l'une quelconque des revendications 13 à 15, **caractérisé en ce que** les moyens pour alimenter le second milieu comprennent au moins une buse (12, 30) avec au moins une ouverture depuis laquelle le second milieu est pulvérisé séparément du milieu d'actionnement vers le dispositif éjecteur (6).

17. Appareil selon l'une quelconque des revendications 13 à 16, **caractérisé en ce que** les moyens pour alimenter le second milieu comprennent un dispositif à pompe (35).

18. Appareil selon l'une quelconque des revendications 13 à 17, **caractérisé en ce qu'**au moins une partie des dispositifs pour alimenter le second milieu fonctionne avec un milieu d'actionnement.

19. Appareil selon l'une quelconque des revendications 13 à 18, **caractérisé en ce qu'**au moins une buse (30) du second milieu est agencée vers le tube éjecteur (13) au voisinage de l'embouchure du tube éjecteur.

20. Appareil selon l'une quelconque des revendications 13 à 19, **caractérisé en ce que** la buse (30) du second milieu est agencée vers le tube éjecteur (13), avantageusement vers sa paroi.

21. Appareil selon l'une quelconque des revendications 13 à 20, **caractérisé en ce que** l'appareil comprend un moyen (38) pour séparer les matières liquides et/ou solides depuis le flux de gaz.

22. Appareil selon l'une quelconque des revendications 13 à 21, **caractérisé en ce que** l'appareil comprend un raccord de sortie (39) pour mener les matières liquides et/ou solide séparées vers un égout, un conteneur séparé (40), ou en retour au dispositif séparateur (5).
